# EUROPEAN PATENT SPECIFICATION

(11) **EP 0 792 032 B1**
(45) Date of publication and mention of the grant of the patent: **16.08.2000**
(21) Application number: 97102920.2
(22) Date of filing: 21.02.1997
(51) Int. Cl.: H04B 10/08, H02G 1/00, G01M 11/00

(54) **Network restoration method**
Netzwerk-Reparaturverfahren
Procédé de restauration d'un réseau

(30) Priority: 23.02.1996 US 606122
(43) Date of publication of application: 27.08.1997
(73) Proprietor: AT&T Corp., New York, NY 10013-2412 (US)
(72) Inventor: Eslambolchi, Hossein, Basking Ridge, N.J. 07920 (US)
(74) Representative: Kuhnen & Wacker

(56) References cited:
- WO-A-93/02344
- DE-A- 4 231 856
- US-A- 4 922 514
- US-A- 5 373 356
- US-A- 5 396 569
- ZA-A- 959 973
- PATENT ABSTRACTS OF JAPAN vol. 015, no. 380 (P-1256), 25 September 1991 & JP 03 149502 A (FUJIKURA LTD), 26 June 1991,

## Description

### Technical Field

This invention relates generally to a method and system for automatically locating a failed cable in a network and for dispatching a technician to repair the cable.

### Background Art

Providers of telecommunications services, such as AT&T, maintain extensive networks of copper and optical fiber cables to carry telecommunications traffic. A typical cable carries traffic between a pair of network hubs when the hubs are located sufficiently close to each other. For long haul traffic, a typical cable runs between a pair of regenerators that boost the signals that are carried by the cable between the hubs. While great care is taken to protect such cables, cables can and do become broken. For example, a cable may become severed or broken as a result of an act of nature, such as a flood or earthquake. Alternatively, a contractor may sever the cable inadvertently during excavation.

A broken or severed cable disrupts telecommunications traffic if no other path exists to re-route the traffic. If the cable is not repaired or if traffic is not re-routed, subscribers become inconvenienced and the service provider loses revenues. Even if a redundant or alternative path exists for routing traffic around a broken cable, it is nonetheless desirable to repair a broken cable quickly. At the present time, restoration of a broken cable is a time-consuming process. First, the break in the cable must be detected. To that end, present day cables are generally monitored by various systems that are capable of detecting a disruption in the traffic carried by the cable. Upon detecting a broken cable, a dispatcher will dispatch one or more technicians to the location of the break in the cable to perform the necessary repairs.

When an optical fiber cable is broken or severed, the location of break may be established by the use of an Optical Time Domain Reflectometer (OTDR). The OTDR measures the degree to which light directed into one end of an optical cable scatters as the light propagates along the cable. If the cable is broken, the degree to which the light scatters will be characteristic of the distance between the break in the cable and the end into which the light is directed.

Presently, such OTDR measurements are made manually. Once a broken cable is detected, a technician is dispatched to one of the two regenerators or network hubs that lie on opposite sides of the broken cable. At the regenerator or network hub, the technician uses the OTDR to establish the location of the break. After the break has been located, a disptacher will contact one or more technicians, either by telephone or radio and advise them of the broken cable and its location. In addition, the necessary materials required for repair must be located and sent to the site of the cable break. At the present time, no means are utilized for tracking individual technicians. Thus, once a cable break occurs, and its location is ascertained, it is usually necessary for the dispatcher to page or otherwise contact several technicians in an effort to locate those closest to the cable break. The technicians contacted by telephone or by radio generally receive sufficient information in order to proceed directly to the location at which the cable is broken. However, those technicians that are reached by a radio page must call the dispatcher to receive the necessary information, further delaying the repairs.

From US4922514 a system and method for dispatching technicians to remote sites in response to alarm signals is known, comprising the steps of automatically monitoring the network to detect the fault therein and automatically detecting the location of the break in the cable. In order to achieve this a processor monitors various sites for alarm signals and upon the occurrence of alarm signal, the processor accesses a database of remote field engineers. The processor sequentially picks the next field engineer and contacts that engineer to provide the service. The technical teaching of the one simply selects technicians in sequential order with no regard to their geographic location.

Thus, there is an need for an improved technique for restoring a network that is not subject to the forgoing disadvantages.

### Summary of the Invention :

This object is solved with the features of claim 1 and 6.

Briefly, in accordance with a preferred embodiment of the invention, a method is provided for rapidly locating a failed cable in a network and for automatically dispatching a technician to repair the cable. The method of the invention is practiced by automatically monitoring the cable to detect any breaks. Once a break is detected, then the location of the break is automatically determined. In the case of a fiber optic cable, an Automatic Optical Time Domain Reflectometer may be employed to establish the location at which the cable is broken. Once the location of the break in the cable has been established, a check is made automatically of the location of the repair technicians to determine those closest to the break in the cable. In practice, the location of each repair technician may be established by way of a Global Positioning system that monitors the location of each technician's vehicle. From a knowledge of the location of each technician's vehicle, an estimate can be made of the time required for that technician to travel to the location of the break in the cable. Thereafter, a data base is accessed to determine information about the technicians, including their availability, equipment and skills. Based on such information about the technicians, and their travel distance, one or more technicians may be selected for dispatch. The selected technicians are then automatically alerted and provided with sufficient information regarding the nature and location of the cable break. Such information is typically sent by wireless communication to the technician for receipt at the technicians' mobile data terminal. Thus, the overall time between the occurrence of a broken cable and the dispatch of one or more technicians to effect the necessary repairs can be minimized.

### Brief Description of the Drawing

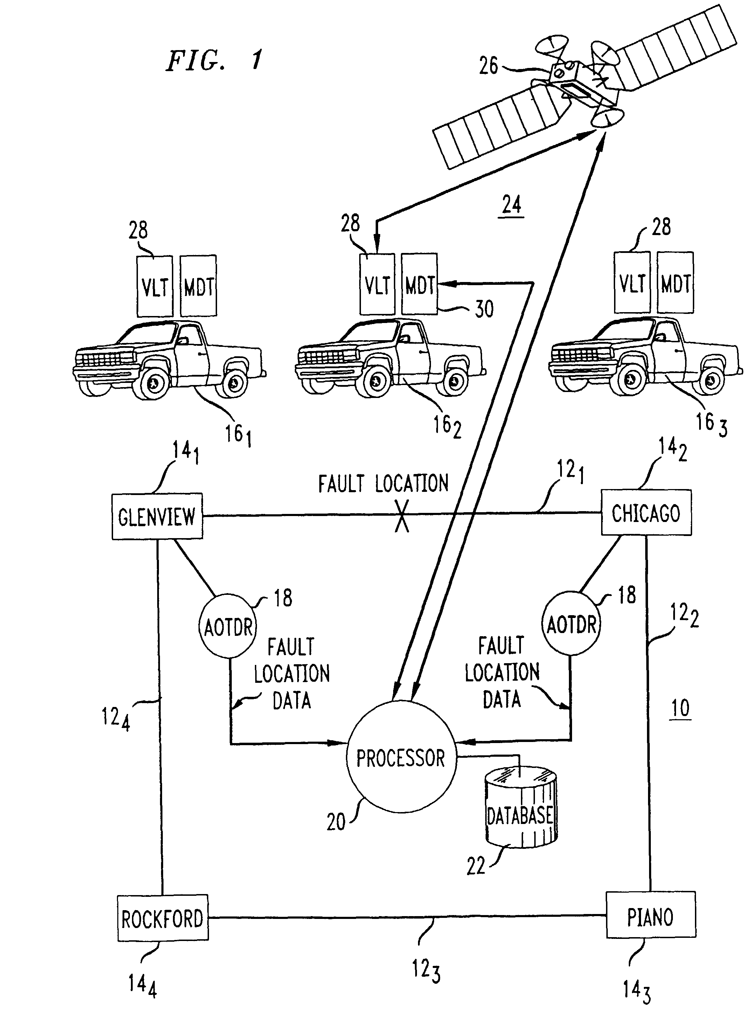

FIGURE 1 is a block schematic diagram illustrating the restoration method of the invention.

### Detailed Description

FIGURE 1 shows a ring-like network 10 comprised of four optical fibers cables 12₁-12₄ for carrying voice and/or data between four network hubs 14₁-14₄ representing the cities of Glenview, Chicago, Plano and Rockford, respectively, in the state of Illinois. In the illustrated embodiment, the optical fiber cable 12₁ links the network hubs 14₁ (Glenview) and 14₂ (Chicago) while the cable 12₂ links the hubs 14₂ (Chicago) and 14₃ (Plano). The cable 12₃ links the hubs 14₃ (Plano) and 14₄ (Rockford) while the cable 12₄ links the hubs 14₄ (Rockford) and 14₁ (Glenview).

At each of the hubs 14₁-14₄, there exists monitoring equipment (not shown) of a type well known in the art for monitoring the voice and/or data traffic carried on the cables 12₁-12_{4.} Thus, a break the cable 12₁ linking the hubs 14₁ and 14₂ (as represented by the "X" in FIG. 1) would be sensed by the monitoring equipment at each of these hubs. In the past, such a break in the cable 12₁ was located manually. After the break in the cable 12₁ was detected, a technician would be dispatched to one of the two hubs 14₁ and 14₂ lying on opposite sides of the cable break. (In the event that one or more regenerators (not shown) are present with the path the cable 12₁, the technician would be dispatched to one of the two regenerators lying on opposite sides of the break in the cable.) Thereafter, the technician would utilize an OTDR (not shown) to ascertain the location of the break in the cable 12₁.

Once the technician had manually established the location of the break, the technician reported such information to a dispatcher (not shown). The dispatcher then issued a dispatch call, via radio or telephone contact, or a radio page, to at least one, and usually, several technicians 16₁-16₃ (each represented graphically in FIG. 1 as a repair vehicle). Depending on which of the technicians responded, and their individual proximity to the location of the cable break, the dispatcher ultimately would instruct one or more of the technicians to proceed to the location of the broken cable and make the necessary repair.

In the past, the overall time elapsed between first detecting a break in the cable 12₁ and the dispatch of technicians to the site of the cable break was considerable. For instance, a fair amount of time often elapsed before the technician actually arrived at one of the two hubs 14₁ and 14₂ to ascertain the location of the break in the cable 12₁. Even after the break in the cable 12₁ had been located, it often took some time for the dispatcher to determine the identity of the closest technician and to dispatch that individual to the location of the break in the cable.

In accordance with the invention, there is provided a technique for automatically locating a break in a cable, such as the cable 12₁, and for automatically dispatching one or more technicians 16₁-16₃ to the site of the break to commence the necessary repairs. To automatically locate the break in the cable, an Automatic OTDR 18 (AOTDR) of a type well known in the art is provided at each of the hubs 14₁-14₄ (only the AOTDR at the hubs 14₁ and 14₂ being shown). Upon a disruption of the traffic across the cable 12₁, the AOTDR 18 at each of the hubs 14₁ and 14₂ is activated. Once activated, each AOTDR 18 automatically establishes the location of the cable break by injecting light into the cable and then determining the degree to which the light scattered. By automatically establishing the location of the fault or break in the cable 12₁, the AOTDRs 18-18 reduce the overall time for restoration of the network 10 by eliminating the time that was previously spent by a technician to travel to one of the hubs 14₁ and 14₂. (In the event that there are one or more regenerators (not shown) lying along the path of the cable 12₁, then an AOTDR would be situated at each regenerator.)

The fault location information generated by each AOTDR 18 is communicated electronically, either by a wired or wireless link, to a processor 20, in the form of a general purpose computer. The processor 20 is coupled to a data base 22 that stores information about each of the technicians 16₁-16₃. (Although the data base 22 is depicted separately from the processor 20, the data base could reside on a storage device, such as a magnetic disk drive, within the processor.) In practice, the data base 22 contains the identity and availability of each technician as well as information about the technician's skills and what repair equipment is available to him or her.

Upon receipt of the fault location information, the processor 20 immediately ascertains the location of each of the technicians 16₁-16₃ to determine who is closest to the location of the break in the cable 12₁. In the illustrated embodiment, the processor 20 determines the location of each of the technicians 16₁-16₃ by locating the position of each technician's vehicle. To that end, the processor sends a locate command to a Global Positioning System 24 that includes a plurality of satellite transponders 26 (only one shown) that orbit the earth, and a plurality of Vehicle Locating Transponders (VLT) 28-28, each located in the vehicle of a corresponding one of the technicians 16₁-16₃. In response to the locate command, each orbiting satellite 26 broadcasts information to each VLT 28 of each technician. In turn, the VLT 28 associated with each technician's vehicle responds by broadcasting information back to each satellite 26. Based on the information returned from each such VLT 28, the location of each technician's vehicle, and presumably the location of the technician, can readily be established.

Once each technician is located, the location information is communicated to the processor 20. From the fault location information received from the AOTDRs 18-18 and the technician location information established by the Global Positioning System 24, the processor 20 then determines how far each technician is from the break in the cable 12₁. Based on the distance of each technician from the break in the cable, the processor 20 then estimates the time required by each technician to travel to the location where the cable is broken. Thereafter, the processor 20 determines who among the technicians 16₁-16₃ is closest (i.e., has the shortest travel time) to the location where the cable 12₁ is broken as well as who is available and has the necessary skills and equipment needed to make the repairs. From that information, the processor 20 select the appropriate technician(s) for dispatch to the site of the broken cable.

Normally, the closest technicians(s) would be selected for dispatch. However, this may not always be the case. For example, even though technician 16₁ may be closest to the location where the cable 12₁ is broken, that technician may not have the requisite equipment and/or skills needed to repair the cable. Moreover, despite the proximity of the technician 16₁, that technician may not be available because of other commitments. Therefore, the processor 20 may determine that the technician 16₂, although geographically farther from the break in the cable 12₁, should be selected for dispatch rather than technician 16₁. Indeed, the processor 20 may determine that several technicians should be dispatched, based on the nature of the cable 12₁ that was broken.

Once the processor 20 has selected who among the technicians 16₁-16₃ should be dispatched, the processor then alerts each such technician by causing a message to be sent to a Mobile Data Terminal (MDT) 30 associated with that technician. In practice, each technician's MDT 30 has the capability to receive and transmit data by using the same type of wireless radio link as used by conventional cellular telephones. Indeed, the processor 20 typically accesses each MDT 30 by dialing a cellular telephone number associated with that terminal. Once a communications link is established between the processor 20 and each MDT 30 of each selected technician, the processor then communicates all relevant information associated with the break in the cable 12₁, including the type of cable and the location of the break. Upon receipt of the information at his or her MDT 30, the selected technician would then be sent an acknowledgment back to the processor indicating that the technician received the information.

Under some circumstances, it may be desirable for the processor 20 to effect a radio page of one or more of the selected technicians in addition to sending information for receipt on that technician's MDT 30. For example, a selected technician may be away from his or her MDT 30 and thus may not be able to respond immediately to the information provided by the processor 20. Thus, it may be desirable for the processor 20 to effect a radio page by first establishing a telephone link with a radio paging service (not shown). Once such a link is established, the processor 20 would electronically communicate the identity of the selected technician by providing the Personal Identification Number (PIN) of the technician to the paging service. In response to the page, the selected technician would know to access his or her MDT 30. Depending on the capability of the radio paging system, the fault location information could also be communicated by the radio page.

The foregoing describes a technique for restoring a network by first automatically establishing the location of a fault (i.e., broken cable) and then automatically dispatching one or more technicians to the site of the fault. By automatically locating the fault and then automatically dispatching one or more technicians to the fault site, the total time associated with repair of the fault can be reduced, thereby minimizing down time.

## Claims

1. A method for rapidly detecting a fault in a network, such as a cable break and for dispatching at least one technician to repair the cable, comprising the steps of:
automatically monitoring the network to detect the fault therein and automatically detecting the location of the break in the cable;
characterized by
automatically establishing the location of repair technicians and their relative proximity to the location of the break in the cable;
selecting at least one available technician based in part on the proximity of that technician to the location of the break in the cable; and
automatically dispatching each selected technician to the detected location of the break in the cable so that said each technician can effect the necessary repair.

2. The method according to claim 1 wherein the cable is an optical fiber cable and wherein the location of the break in the cable is automatically established by automatically directing light into at least one end of the cable and then determining the degree to which the light scatters within the cable.

3. The method according to claim 1 wherein the location of each available technician is automatically established by the steps of:
broadcasting radio signals to a vehicle locating transponder associated with each technician to cause said transponder to return a radio signal;
establishing from said returned radio signal the location of each technician from which the proximity of that technician to the break in the cable can be determined;
accessing a data base containing information data about each technician, including the technician's availability, equipment and ability of effect the necessary repair;
and determining, from the information in the data base, and the proximity of each technician to the break in the cable who among the technicians should be dispatched to effect a repair.

4. The method according to claim 1 wherein the each selected technician is dispatched by automatically broadcasting information indicative to the location of the break in the cable for receipt by a mobile display terminal associated with said each technician.

5. The method according to claim 4 further including the step of broadcasting a radio page to said each selected technician.

6. A system for automatically dispatching at least one of technician to a break in a cable, comprising: means (18) for automatically determining at what location the cable is broken characterized by:
means (28) for automatically establishing where each of a plurality of repair technicians is located;
a database (22) containing information about availability, equipment and skill of each of said repair technicians;
means (20) for accessing said data base to select, in accordance with said information about said technicians, and in accordance with the location where the cable is broken and the locations of said technicians, who among the technicians should be dispatched to the location where the cable is broken to effect a repair; and
means (30) responsive to said database accessing means for communicating information to each selected technician regaining the broken cable.

7. The system according to claim 6 wherein the means for automatically determining the location at which the cable is broken comprises at least one Automatic Time Domain Reflectometer.

8. The system according to claim 6 wherein the means for establishing the technicians' locations comprises a Global Positioning System including a plurality of satellite transponders and a plurality of vehicle locating transponders, each carried by a vehicle associated with an individual technician.

9. The system according to claim 6 wherein the means for accessing the data base comprises a general purpose computer.

10. The system according to claim 6 wherein the means for communicating information comprises a mobile display terminal.

## Patentansprüche

1. Verfahren zum raschen Auffinden eines Fehlers in einem Netzwerk, beispielsweise eines Kabelbruches, und zur Aussendung mindestens eines Technikers zur Reparatur des Kabels, mit folgenden Verfahrensschritten:
automatisches Überwachen des Netzwerkes zum Feststellen des Fehlers darin und automatisches Detektieren des Ortes des Kabelbruches;
gekennzeichnet durch folgende Verfahrensschritte:
automatisches Erfassen des Ortes der Reparaturtechniker und ihrer relativen Nähe zum Ort des Kabelbruches;
Auswahl mindestens eines verfügbaren Technikers, teilweise basierend auf der Nähe dieses Technikers zum Ort des Kabelbruches; und
automatisches Aussenden jedes ausgewählten Technikers zu dem detektierten Ort des Kabelbruches, derart, daß jeder Techniker die notwendige Reparatur durchführen kann.

2. Verfahren nach Anspruch 1, wobei das Kabel ein optisches Faserkabel ist und wobei der Ort des Kabelbruches automatisch erfaßt wird, indem automatisch Licht in mindestens ein Ende des Kabels eingespeist wird und dann der Grad der Streuung des Lichts im Kabel bestimmt wird.

3. Verfahren nach Anspruch 1, bei welchem der Ort jedes verfügbaren Technikers automatisch durch folgende Schritte erfaßt wird:
Aussenden von Hochfrequenzsignalen zu einem ein Fahrzeug lokalisierenden Transponder, der jedem Techniker zugeordnet ist, um den Transponder dazu zu veranlassen, Hochfrequenzsignale zurückzusenden;
Erfassen des Ortes jedes Technikers aus den rückgesendeten Hochfrequenzsignalen, woraus die Nähe des betreffenden Technikers zu dem Kabelbruch bestimmt wird;
Zugriffnehmen auf eine Datenbasis, welche Informationsdaten über jeden Techniker enthält, einschließlich der Verfügbarkeit des Technikers, der Ausrüstung und der Fähigkeit zur Durchführung der notwendigen Reparatur; und
Bestimmung, wer unter den Technikern zur Durchführung einer Reparatur ausgesendet wird, aus der Information in der Datenbasis und der Nähe des jeweiligen Technikers zum Kabelbruch.

4. Verfahren nach Anspruch 1, bei welchem jeder ausgewählte Techniker dadurch ausgesendet wird, daß automatisch Informationen ausgesendet werden, welche den Ort des Kabelbruches angeben und welche von einem mobilen Anzeigeterminal empfangen werden, der jedem Techniker zugeordnet ist.

5. Verfahren nach Anspruch 4, welches weiter den Schritt des Aussendens eines Funkanrufes an jeden ausgewählten Techniker umfaßt.

6. System zum automatischen Aussenden mindestens eines Technikers zu einem Bruch in einem Kabel mit Mitteln (18) zur automatischen Bestimmung des Ortes des Kabelbruches, gekennzeichnet durch:
Mittel (28) zum automatischen Erfassen des Ortes, an welchem sich jeder aus einer Mehrzahl von Reparaturtechnikem befindet;
eine Datenbasis (22), welche Informationsdaten über die Verfügbarkeit, die Ausrüstung und die Fähigkeiten jedes der Reparaturtechniker enthält;
Mittel (20) zur Zugriffnahme zur Datenbasis, um in Entsprechung mit den Informationen über die Techniker und in Entsprechung mit dem Ort, an dem sich der Kabelbruch befindet, sowie in Entsprechung mit den Orten der Techniker auszuwählen, wer unter den Technikern zu dem Ort des Kabelbruches ausgesendet werden soll, um eine Reparatur durchzuführen; und
Mittel (30) welche auf die Zugriffsmittel zur Datenbasis ansprechen, um Informationen an jeden ausgewählten Techniker zu übermitteln, der den Kabelbruch repariert.

7. System nach Anspruch 6, bei welchem die Mittel zum automatischen Bestimmen des Ortes, an welchem sich der Kabelbruch befindet, mindestens ein automatisches Zeitdomänen-Reflektometer (Automatic Time Domain Reflectometer) enthalten.

8. System nach Anspruch 6, bei welchem die Mittel zur Erfassung der Orte der Techniker ein GPS-System mit einer Mehrzahl von Satellitentranspondem sowie eine Mehrzahl von fahrzeugortenden Transpondem enthalten, welche jeweils von einem Fahrzeug mitgeführt werden, das einem einzelnen Techniker zugeordnet ist.

9. System nach Anspruch 6, bei welchem die Mittel zur Zugriffnahme zur Datenbasis einen Vielzweckrechner enthalten.

10. System nach Anspruch 6, bei welchem die Mittel zur Übermittlung von Informationen einen mobilen Anzeigeterminal enthalten.

## Revendications

1. Procédé pour détecter rapidement un défaut dans un réseau, tel qu'une rupture de câble, et pour envoyer au moins un technicien afin de réparer le câble, comprenant les étapes de surveillance automatique du réseau pour y détecter le défaut et de détection automatique de la position de la rupture dans le câble ;
caractérisé par :
l'établissement automatique de la position des techniciens de réparation et de leur proximité relative par rapport à la position de la rupture dans le câble ;
le choix d'au moins un technicien disponible, sur la base en partie de la proximité de ce technicien par rapport à la position de la rupture dans le câble ; et
l'envoi automatique de chaque technicien choisi à la position détectée de la rupture dans le câble de sorte que le dit chaque technicien puisse effectuer la réparation nécessaire.

2. Procédé selon la revendication 1, dans lequel le câble est un câble à fibre optique, et dans lequel la position de la rupture dans le câble est automatiquement établie par introduction automatique de lumière dans au moins une extrémité du câble puis détermination du degré auquel la lumière se disperse dans le câble.

3. Procédé selon la revendication 1, dans lequel la position de chaque technicien disponible est automatiquement établie par les étapes de :
diffusion de signaux radio vers un émetteur-récepteur de localisation de véhicule associé à chaque technicien, de manière telle que le dit émetteur-récepteur renvoie un signal radio ;
établissement, à partir du dit signal radio renvoyé, de la position de chaque technicien à partir de laquelle on peut déterminer la proximité de ce technicien par rapport à la rupture dans le câble ;
accès à une base de données contenant des données d'information au sujet de chaque technicien, incluant la disponibilité du technicien, son équipement et son aptitude à effectuer la réparation nécessaire ; et
détermination, à partir des informations dans la base de données et de la proximité de chaque technicien par rapport à la rupture dans le câble, de celui, parmi les techniciens, qui doit être envoyé pour effectuer une réparation.

4. Procédé selon la revendication 1, dans lequel le dit chaque technicien choisi est envoyé par radiodiffusion automatique d'informations indicatives de la position de la rupture dans le câble, qui sont reçues par un terminal d'affichage mobile associé au dit chaque technicien.

5. Procédé selon la revendication 4, comprenant en outre l'étape de diffusion d'un message radio au dit chaque technicien choisi.

6. Système pour l'envoi automatique d'au moins un technicien à une position de rupture dans un câble, comprenant:
des moyens (18) pour déterminer automatiquement l'endroit où le câble est cassé ;
caractérisé par :
des moyens (28) pour établir automatiquement l'endroit où se trouve chacun d'une pluralité de techniciens de réparation ;
une base de données (22) contenant des informations au sujet de la disponibilité, de l'équipement et de la compétence de chacun des dits techniciens de réparation ;
des moyens (20) pour accéder à la dite base de données afin de choisir, conformément aux dites informations concernant les dits techniciens et en fonction de la position où le câble est cassé et des positions des dits techniciens, celui parmi les techniciens qui doit être envoyé à l'endroit où le câble est cassé pour effectuer une réparation ; et
des moyens (30) qui répondent aux dits moyens d'accès de base de données afin de communiquer des informations à chaque technicien choisi pour la réparation du câble cassé.

7. Système selon la revendication 6, dans lequel les moyens pour la détermination automatique de la position à laquelle le câble est cassé comprennent au moins un réflectomètre automatique dans le domaine du temps.

8. Système selon la revendication 6, dans lequel les moyens pour établir les positions des techniciens comprennent un système de positionnement global GPS incluant une pluralité d'émetteurs-récepteurs de satellite et une pluralité d'émetteurs-récepteurs de positionnement de véhicule portés chacun par un véhicule associé à un technicien individuel.

9. Système selon la revendication 6, dans lequel les moyens pour accéder à la base de données comprennent un ordinateur d'usage général.

10. Système selon la revendication 6, dans lequel les moyens pour communiquer des informations comprennent un terminal d'affichage mobile.
